# EUROPÄISCHE PATENTSCHRIFT

(11) **EP 1 846 266 B1**
(45) Veröffentlichungstag und Bekanntmachung des Hinweises auf die Patenterteilung: **25.11.2009**
(21) Anmeldenummer: 06704559.1
(22) Anmeldetag: 08.02.2006
(51) Int. Cl.: B60R 13/08

(54) **SCHALLABSORBIERENDE VERKLEIDUNG FÜR KRAFTFAHRZEUGE, INSBESONDERE MOTORHAUBENVERKLEIDUNG**
SOUND-ABSORBENT LINING FOR MOTOR VEHICLES, MORE PARTICULARLY ENGINE BONNET LINING
REVETEMENT D'ABSORPTION ACOUSTIQUE POUR VEHICULES AUTOMOBILES, EN PARTICULIER REVETEMENT DE CAPOT

(30) Priorität: 10.02.2005 DE 102005006234
(43) Veröffentlichungstag der Anmeldung: 24.10.2007
(73) Patentinhaber: Carcoustics Tech Center GmbH, 51381 Leverkusen (DE)
(72) Erfinder: SVIRIDENKO, Andreas, 41540 Dormagen (DE); CZERNY, Hans, Rudolf, 53913 Swisttal (DE)
(74) Vertreter: Bauer Vorberg Kayser Patentanwälte
(86) Internationale Anmeldenummer: PCT/EP2006/001099
(87) Internationale Veröffentlichungsnummer: WO 2006/084677

(56) Entgegenhaltungen:
- FR-A- 2 300 748
- GB-A- 1 506 287
- US-A- 5 744 763
- PATENT ABSTRACTS OF JAPAN Bd. 2002, Nr. 05, 3. Mai 2002 (2002-05-03) & JP 2002 023765 A (SK KAKEN CO LTD), 25. Januar 2002 (2002-01-25)

## Beschreibung

Die Erfindung betrifft eine selbsttragende, Luftschall absorbierende Motorraumverkleidung für Kraftfahrzeuge, insbesondere in Form einer Motorhauben- oder motorseitigen Stirnwandverkleidung, mit mindestens einer offenzelligen Schaumstofflage, die zumindest einseitig mit einem Abdeckvlies kaschiert ist, wobei zumindest auf einer Seite der Schaumstofflage eine das Abdeckvlies mit der Schaumstofflage verbindende offenporige Beschichtung angeordnet ist.

Derartige Verkleidungen sind z.B. aus der DE 85 27 746 U1 bekannt. Die dort beschriebene Schalldämmplatte besteht aus einer Schaumstoffschicht aus Polyurethan-, Phenol-oder Melaminharzschaum, die auf beiden Seiten mit dünnen Abdeckschichten kaschiert ist. Die Abdeckschichten bestehen insbesondere aus Mineral- oder Glasfaservliesen. Sie sollen die mechanisch leicht verletzbare Schaumstoffschicht vor einer Beschädigung schützen und in der Sandwichstruktur die durch das Eigengewicht sowie bei Belastung der Schalldämmplatte auftretenden Zug- und Schubkräfte aufnehmen und so eine ausreichende Steifigkeit und Eigentragfähigkeit der Schalldämmplatte bewirken. Das Kaschieren der Schaumstofflage mit dem Abdeckvlies erfolgt dabei üblicherweise durch Aufbringen eines Sprühklebers, durch wasserlösliche oder durch lösungsmittelhaltige Bindemittel oder auch durch Einbringen einer unter Wärmeeinwirkung schmelzenden und nach Wiedererhärten die Schichten verbindenden Kunststofffolie.

Die Verwendung von Mineral- oder Glasfaservliesen ist insbesondere bei der Herstellung derartiger Schalldämpfungsteile problematisch, da der Kontakt mit künstlichen Mineralfasern bei den in der Herstellung eingesetzten Personen Hautirritationen hervorrufen kann. Außerdem werden bei der Verarbeitung, insbesondere beim Zuschnitt von Abdeckvliesen aus künstlichen Mineralfasern mikroskopisch kleine Fasern freigesetzt, die karzinogene Eigenschaften besitzen.

Zudem besteht das Problem, dass herkömmliche Schalldämpfungsteile der aus der DE 85 27 746 U1 bekannten Art im Motorraum von Kraftfahrzeugen bei hohen Temperaturen und Feuchtigkeit oft unzulässige Schrumpf- und Durchbiegungswerte zeigen.

Die FR 2 300 748 A offenbart ein Schallschutzmaterial, insbesondere einen Teppichaufbau, der eine erste Lage eines zur Sichtseite hin gelegenen textilen Materials und eine biegsame Lage schallreflektierenden Materials mit Füllungsmaterial hoher Dichte aufweist. Bei der biegsamen Lage handelt es sich um einen Überzug bestehend aus einer Mischung aus aufschmelzbarem Kunststoffpulver und Füllungsmaterial hoher Dichte, z.B. eine Mischung aus Polyethylen und Kalziumkarbonat-Füllungsmaterial. Des Weiteren kann eine Unterschicht aus z.B. Schaumstoffmaterial vorgesehen sein, die mit dem Kunststoffmaterial stoffschlüssig verbunden ist.

Aus der GB 1 506 287 A ist eine schalldämmende Verbundplatte für Kraftfahrzeuge bekannt, die aus einer textilen Oberschicht, insbesondere einem Teppichboden, einer Schwerschicht und einer Schaumstoffschicht besteht. Die Rückseite des Teppichbodens kann mit Polyethylenpulver besintert sind. Die einzelnen Schichten der Verbundplatte sind durch Wärmeeinwirkung, insbesondere mittels Flammkaschierung, oder unter Verwendung eines Haftvermittlers miteinander verbunden.

Die JP 2002023765 A offenbart eine schallabsorbierende Platte, die aus einer porösen Schicht mit integrierten Partikeln und einer viele offene Zellen aufweisenden Platte besteht, wobei die poröse Schicht Bindemittel und anorganisches Granulat enthält.

Die US 5 744 763 A offenbart eine schallabsorbierende Motorhaubenverkleidung, die eine Schicht aus pulverisiertem Gummi und die Gummipartikel umschließende Abdeckschichten aufweist, wobei die Gummipartikel aus Gummipartikeln verschiedenen Materials, verschiedener Korngrößen und verschiedener Kornformen zusammengesetzt sind. Die Abdeckschichten können dabei mit einer Mikroperforation versehen sein.

Der vorliegenden Erfindung liegt die Aufgabe zugrunde, eine Motorraumverkleidung der eingangs genannten Art zur Verfügung zu stellen, die sich mineralfaserfrei herstellen lässt und dennoch bei Temperaturen im Minusgradbereich sowie bei hohen Temperaturen bis +180°C, insbesondere auch in feuchter Umgebung eine verbesserte Formstabilität aufweist.

Diese Aufgabe wird erfindungsgemäß durch eine Verkleidung mit den Merkmalen des Anspruchs 1 gelöst.

Die erfindungsgemäße schallabsorbierende Verkleidung weist mindestens eine offenzellige Schaumstofflage auf, die zumindest einseitig mit einem Abdeckvlies kaschiert ist, wobei zumindest auf einer Seite der Schaumstofflage eine das Abdeckvlies mit der Schaumstofflage verbindende offenporige Beschichtung aufgetragen ist, welche aus einer Pulvermischung gebildet ist, die aus 15 - 45 Gew.-% thermoplastischem Kunststoff, 8 - 25 Gew.-% duroplastischem Bindemittel und 50 - 70 Gew.-% mineralischen Mikrokörpern zusammengesetzt ist, wobei die mineralischen Mikrokörper aus mineralischen Mikrohohlkörpern gebildet sind.

Die erfindungsgemäße Motorraumverkleidung zeichnet sich bei Temperaturen bis ca. 180°C im Klimawechseltest durch eine hervorragende Formstabilität aus, wobei bei ihrer Herstellung auf die Verwendung von Mineral- und Glasfasern verzichtet werden kann. Auch ist die Wasseraufnahme bei der erfindungsgemäßen Motorraumverkleidung gegenüber herkömmlichen Schalldämpfungsteilen dieser Art erheblich verringert. Die erfindungsgemäße Motorraumverkleidung lässt sich bei ihrer Herstellung ausgezeichnet warmumformen bzw. heißpressen, so dass auch schwierige Geometrien mit kleinen Kurvenradien realisiert werden können.

Die Schaumstofflage der erfindungsgemäßen Motorraumverkleidung ist vorzugsweise aus duroplastischem Schaumstoff, und besonders bevorzugt aus Melaminharzschaumstoff gebildet. Melaminharzschaum weist eine hervorragende Temperaturbeständigkeit auf und gilt als schwerentflammbar.

Das Abdeckvlies bzw. die Abdeckvliese der erfindungsgemäßen Motorraumverkleidung sind vorzugsweise aus Polyesterfasern gebildet. Polyesterfaservlies hat eine hohe Temperaturbeständigkeit und ist zudem fäulnisresistent.

Die thermoplastische Komponente bzw. Komponenten der Beschichtung bestehen vorzugsweise aus Kunststoff bzw. Kunststoffen aus der Gruppe der Polyolefine, Copolyester oder Copolyamide. Vorteilhaft können insbesondere Mischungen dieser thermoplastischen Kunststoffe in der Beschichtung verwendet werden.

Die vernetzende Komponente der Beschichtung ist dagegen vorzugsweise aus Phenolharz, Melaminharz, Melamin-Phenolharz und/oder Epoxydharz gebildet. Eine sehr gute Formbeständigkeit wurde insbesondere dann erzielt, wenn die Beschichtung 2 bis 6 Gew.-% Phenolharz-Bindemittel und 8 bis 15 Gew.-% Melaminharz-Bindemittel enthält.

Die mineralischen Mikrokörper der Beschichtung sind aus mineralischen Mikrohohlkörper gebildet. Dies wirkt sich nicht nur günstig hinsichtlich eines geringen Flächengewichtes der Beschichtung aus, sondern verbessert zudem auch die Schallabsorption der erfindungsgemäßen Verkleidung.

Die offenporige Beschichtung kann einseitig oder vorzugsweise beidseitig auf die Schaumstofflage aufgetragen sein. Nach einer vorteilhaften Ausgestaltung der erfindungsgemäßen Motorraumverkleidung kann die Beschichtung auch zwischen zwei oder mehreren dünnen Schaumstofflagen aufgebracht sein. Hierdurch lässt sich die Formstabilität der Motorraumverkleidung weiter verbessern.

Prozesstechnisch kann die Beschichtung als Pulvermischung zunächst auf die Schaumstofflage oder alternativ auch auf die der Schaumstofflage zugewandte Seite des Abdeckvlieses aufgetragen werden. Nach Abschluss des thermischen Kaschiervorgangs verbindet die Beschichtung das jeweilige Abdeckvlies mit der Schaumstofflage.

Eine weitere vorteilhafte Ausgestaltung der erfindungsgemäßen Motorraumverkleidung ist **dadurch gekennzeichnet, dass** die Schaumstofflage und/oder das Abdeckvlies/die Abdeckvliese hydrophob und/oder olephob ausgerüstet sind. Hierdurch kann die Flüssigkeitsaufnahme der Verkleidung weitestgehend minimiert werden.

Weitere bevorzugte und vorteilhafte Ausgestaltungen der erfindungsgemäßen Motorraumverkleidung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine schematische Querschnittsansicht einer erfindungsgemäßen Verkleidung in einem ersten Ausführungsbeispiel;
- Fig. 2: eine schematische Querschnittsansicht einer erfindungsgemäßen Verkleidung in einem zweiten Ausführungsbeispiel;
- Fig. 3: eine schematische Querschnittsansicht einer erfindungsgemäßen Verkleidung in einem dritten Ausführungsbeispiel; und
- Fig. 4: eine schematische Darstellung einer Anlage zur Herstellung einer erfindungsgemäßen Verkleidung.

Bei den in der Zeichnung dargestellten Verkleidungen 1, 1', 1'' handelt es sich um schalldämpfende Verkleidungsteile für den Motorraum eines Kraftfahrzeuges, z.B. um eine Luftschall absorbierende Motorhauben- oder Stirnwandverkleidung.

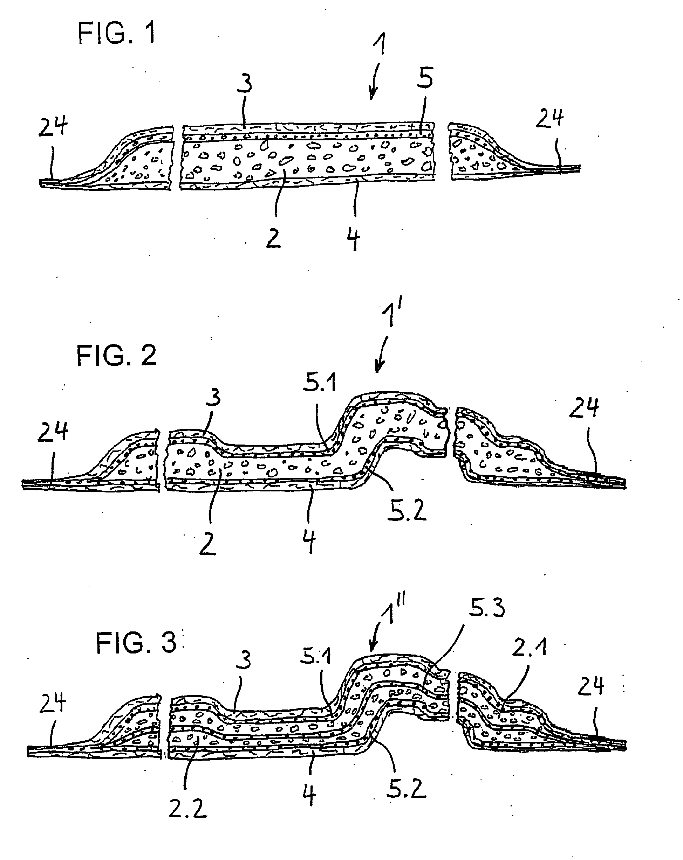

Die in den Figuren 1 und 2 dargestellten Verkleidungen 1, 1' sind jeweils aus einer offenzelligen Schaumstofflage 2 gebildet, die beidseitig mit einem luftdurchlässigen Abdeckvlies 3, 4 kaschiert ist. Die Schaumstofflage 2 weist eine durchschnittliche Dicke im Bereich von ca. 8 bis 30 mm auf und besteht vorzugsweise aus duroplastischem Schaumstoff. Die Schaumstofflage ist relativ leicht; ihr Raumgewicht im unverpressten Zustand liegt im Bereich von etwa 7 bis 12 kg/m³. Besonders bevorzugt besteht sie aus Melaminharzschaum, insbesondere aus Melaminharzschaum, der hydrophob und/oder oleophop eingestellt ist.

Die Abdeckvliese 3, 4 sind aus Polyesterfasern oder aus Polyesterfasern enthaltenden Mischungen gebildet. Es kann sich dabei insbesondere um Nadelvliese, Spinnvliese, mit Bindemittel, z.B. mit Acrylatbinder verfestigte Polyestervliese, und/oder um Mischfaservliese, z.B. Polyester-Viskosevliese handeln. Das Flächengewicht des jeweiligen Abdeckvlieses 3, 4 liegt im Bereich von ca. 30 bis 160 g/m². Die Abdeckvliese 3, 4 können hydrophob und/oder oleophop eingestellt sein.

In Fig. 1 ist auf der Schaumstofflage 2 einseitig eine das Abdeckvlies 3 mit der Schaumstofflage 2 verbindende Beschichtung 5 angeordnet. Die Beschichtung 5 ist aus einer Pulvermischung gebildet, welche aus mindestens einer thermoplastischen Komponente, mindestens einer vernetzenden Komponente und mineralischen (anorganischen) Mikrokörpern zusammengesetzt ist.

Bei der thermoplastischen Komponente handelt es sich beispielsweise um Polyethylen, insbesondere um Polyethylen hoher Dichte (HD-PE). Die Verwendung von Polyethylen bzw. HDPE ist allerdings nicht zwingend. Ebenso kann als thermoplastische Komponente auch ein anderer Kunststoff aus der Gruppe der Polyolefine, Copolyester oder Copolyamide in der Pulvermischung verwendet werden. Der MFI-Wert (MFI = Melt Flow Index, Schmelzindex) bzw. die Viskosität des als thermoplastische Komponente verwendeten Kunststoffs sollte möglichst gering gewählt werden. Vorzugsweise liegt der MFI-Wert der thermoplastischen Komponente der Pulvermischung im Bereich von etwa 18 bis 22 g/10 min (190°/2,16 kg), insbesondere im Bereich von 18 bis 20 g/10 min (190°/2,16 kg).

Die vernetzende Komponente der Beschichtung 5 ist beispielsweise aus Phenolharz, Phenol-Formaldehyd-Harz, Melaminharz, Melamin-Formaldehyd-Harz, Melamin-Phenolharz und/oder aus Epoxydharz gebildet.

Die mineralischen Mikrokörper der Beschichtung 5 bestehen im wesentlichen aus mineralischen Mikrohohlkörpern. Die Korngröße der Mikrokörper liegt im Bereich von 0 bis 400 µm, vorzugsweise im Bereich von 0 bis 300 µm.

Die der offenporigen Beschichtung 5 zugrundeliegende Pulvermischung ist aus 20 bis 30 Gew.-% thermoplastischem Kunststoff, 10 bis 20 Gew.-% duroplastischem Bindemittel und 55 bis 65 Gew.-% mineralischen Mikrokörpern zusammengesetzt, wobei das duroplastische Bindemittel auch mehrere Komponenten umfassen kann.

Eine geeignete Pulvermischung könnte beispielsweise folgende Zusammensetzung aufweisen:

| | |
|---|---|
| 25,0 Gew.-% | polyolefinisches Polymerpulver, z.B. HDPE, mit einer Korngröße bis 200 µm, |
| 4,0 Gew.-% | Phenolharz, |
| 11,0 Gew.-% | Melaminharz, und |
| 60,0 Gew.-% | mineralische Mikrohohlkörper. |

Der Schmelzbereich einer solchen Pulvermischung liegt etwa im Bereich von 100 bis 130°C.

Das in Fig. 2 dargestellte Verkleidungsteil 1' unterscheidet sich von dem Ausführungsbeispiel gemäß Fig. 1 im wesentlichen nur dadurch, dass die Beschichtung 5 auf beiden Seiten der Schaumstofflage 2 aufgetragen bzw. angeordnet ist. Die Beschichtung 5, 5.1, 5.2 weist jeweils ein Flächengewicht im Bereich von 50 bis 200 g/m² auf. Beide Verkleidungsteile 1, 1' sind frei von künstlichen Mineralfasern.

In Fig. 3 ist ein weiteres Ausführungsbeispiel der erfindungsgemäßen Verkleidung dargestellt. Die Verkleidung 1'' ist hier aus zwei relativ dünnen offenzelligen Schaumstofflagen 2.1 und 2.2 gebildet. Die Schaumstofflagen 2.1, 2.1 sind jeweils mit einem luftdurchlässigen Abdeckvlies 3, 4 kaschiert. Die Schaumstofflagen 2.1, 2.2 und die Abdeckvliese 3, 4 entsprechen hinsichtlich ihres Materials dem Ausführungsbeispiel gemäß Fig. 1. Die Abdeckvliese 3, 4 sind jeweils über eine Beschichtung 5.1, 5.2, die der Beschichtung 5 des Ausführungsbeispiels gemäß Fig. 1 entspricht, mit der zugeordneten Schaumstofflage 2.1 bzw. 2.2 verbunden. In Fig. 3 ist zu erkennen, dass eine entsprechende Beschichtung 5.3 auch zwischen den Schaumstofflagen 2.1 und 2.2 aufgetragen ist.

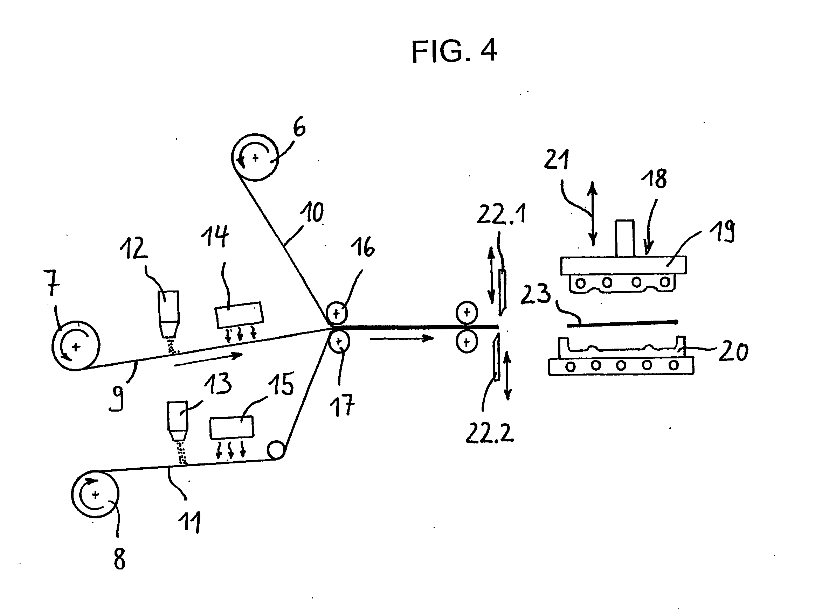

In Fig. 4 ist eine Anlage zur Herstellung eines erfindungsgemäßen schalldämpfenden Verkleidungsteils 1, 1' schematisch dargestellt.

Von Vorratsrollen 6, 7, 8 werden eine Bahn 9 aus offenzelligem, duroplastischem Schaumstoff und eine obere Bahn 10 sowie eine untere Bahn 11 eines Vliesstoffes als Abdeckvlies abgewickelt. Der verwendete duroplastische Schaumstoff kann mit einem wärmeaushärtenden, noch nicht vernetzten Bindemittel wie z.B. Melaminharz oder Phenolharz imprägniert sein.

Der Schaumstoffbahn 9 und der unteren Vliesstoffbahn 11 sind jeweils ein Streukopf 12, 13 oder dergleichen zum Aufbringen der oben genannten Pulvermischung zugeordnet. Bahnabwärts der Streuköpfe 12, 13 ist mindestens eine Heizvorrichtung (z.B. ein Heizstrahler) 14, 15 zum Anschmelzen oder Schmelzen der Pulvermischung angeordnet.

Die Bahnen 9, 10, 11 werden zusammengeführt und mittels einen Walzenspalt begrenzender Andruckwalzen 16, 17 gegeneinander gepresst. Die so mit Abdeckvliesen 10, 11 kaschierte Schaumstoffbahn 9 wird anschließend einem beheizten Formpresswerkzeug 18 zugeführt, das ein Oberwerkzeug 19 und ein Unterwerkzeug 20 umfasst, die entsprechend dem Doppelpfeil 21 relativ aufeinander zu-und von einander wegbewegt werden können. Dem Formpresswerkzeug 18 ist eine Schneidevorrichtung 22.1, 22.2 zur Erzeugung passender Zuschnitte 23 vorgeschaltet. Alternativ oder ergänzend kann auch das Formpresswerkzeug 18 selbst mit einer Schneidevorrichtung versehen sein. Der jeweilige Zuschnitt 23 der mit Abdeckvliesen 10, 11 kaschierten Schaumstoffbahn 9 wird in dem beheizten Formpresswerkzeug 18 entsprechend der gewünschten Kontur des benötigten Verkleidungsteils 1, 1' bleibend umgeformt, wobei der Rand des jeweiligen Formteils so stark verpresst (verprägt) wird, dass die Schaumstofflage 2 schließlich zu einem kompakten umlaufenden Randstreifen 24 verdichtet ist (vgl. Figuren 1 und 2).

## Patentansprüche

1. Selbsttragende, Luftschall absorbierende Motorraumverkleidung (1, 1', 1'') für Kraftfahrzeuge, insbesondere in Form einer Motorhaubenverkleidung oder motorseitigen Stirnwandverkleidung, mit mindestens einer offenzelligen Schaumstofflage (2; 2.1, 2.2), die zumindest einseitig mit einem Abdeckvlies (3, 4) kaschiert ist, wobei zumindest auf einer Seite der Schaumstofflage eine das Abdeckvlies mit der Schaumstofflage verbindende offenporige Beschichtung (5; 5.1, 5.2, 5.3) aufgetragen ist,
**dadurch gekennzeichnet, dass**
die Beschichtung (5; 5.1, 5.2, 5.3) aus einer Pulvermischung gebildet ist, die aus
15 - 45 Gew.-% thermoplastischem Kunststoff,
8 - 25 Gew.-% duroplastischem Bindemittel und
50 - 70 Gew.-% mineralischen Mikrokörpern zusammengesetzt ist, wobei die mineralischen Mikrokörper aus mineralischen Mikrohohlkörpern gebildet sind.

2. Motorraumverkleidung nach Anspruch 1,
**dadurch gekennzeichnet, dass** mindestens zwei Schaumstofflagen (2.1, 2.2) vorhanden sind, wobei die Beschichtung (5.3) auch zwischen mindestens zwei der Schaumstofflagen (2.1, 2.2) aufgetragen ist.

3. Motorraumverkleidung nach Anspruch 1 oder 2,
**dadurch gekennzeichnet, dass**
die Schaumstofflage (2) oder Schaumstoff lagen (2.1, 2.2) aus duroplastischem Schaumstoff gebildet sind.

4. Motorraumverkleidung nach einem der Ansprüche 1 bis 3, **dadurch gekennzeichnet, dass** sie beidseitig mit einem Abdeckvlies (3, 4) kaschiert ist.

5. Motorraumverkleidung nach einem der Ansprüche 1 bis 4,
**dadurch gekennzeichnet, dass**
die Beschichtung (5.1, 5.2) auf beiden Seiten der Schaumstofflage (2) aufgetragen ist.

6. Motorraumverkleidung nach einem der Ansprüche 1 bis 5,
**dadurch gekennzeichnet, dass**
das Abdeckvlies (3) oder die Abdeckvliese (3, 4) aus Polyesterfasern oder Polyesterfasern enthaltenden Mischungen gebildet sind.

7. Motorraumverkleidung nach einem der Ansprüche 1 bis 6,
**dadurch gekennzeichnet, dass**
die Beschichtung (5; 5.1, 5.2, 5.3) aus
20 - 30 Gew.-% thermoplastischem Kunststoff,
10 - 20 Gew.-% duroplastischem Bindemittel und
55 - 65 Gew.-% mineralischen Mikrohohlkörpern zusammengesetzt ist.

8. Motorraumverkleidung nach einem der Ansprüche 1 bis 7,
**dadurch gekennzeichnet, dass**
die thermoplastische Komponente der Beschichtung (5; 5.1, 5.2, 5.3) ein Kunststoff aus der Gruppe der Polyolefine, Copolyester oder Copolyamide ist.

9. Motorraumverkleidung nach einem der Ansprüche 1 bis 8,
**dadurch gekennzeichnet, dass**
die vernetzende Komponente der Beschichtung (5; 5.1, 5.2, 5.3) aus Phenolharz, Melaminharz, Melamin-Phenolharz und/oder Epoxydharz gebildet ist.

10. Motorraumverkleidung nach einem der Ansprüche 1 bis 9,
**dadurch gekennzeichnet, dass**
die Beschichtung (5)
2 - 6 Gew.-% Phenolharz-Bindemittel und
8 - 15 Gew.-% Melaminharz-Bindemittel enthält.

11. Motorraumverkleidung nach einem der Ansprüche 1 bis 10,
**dadurch gekennzeichnet, dass** die Beschichtung (5, 5.1, 5.2, 5.3) mit einem Flächengewicht im Bereich von 50 bis 200 g/m² auf die Schaumstofflage (2) oder das Abdeckvlies (3, 4) aufgetragen ist.

12. Motorraumverkleidung nach einem der Ansprüche 1 bis 11,
**dadurch gekennzeichnet, dass**
die Mikrokörper eine Korngröße kleiner/gleich 400 µm, vorzugsweise kleiner/gleich 300 µm aufweisen.

13. Motorraumverkleidung nach einem der Ansprüche 1 bis 12,
**dadurch gekennzeichnet, dass**
sie mineralfaserfrei, insbesondere glasfaserfrei ist.

14. Motorraumverkleidung nach einem der Ansprüche 1 bis 13,
**dadurch gekennzeichnet, dass**
die Schaumstofflage (2; 2.1, 2.2) und/oder das Abdeckvlies (3)/die Abdeckvliese (3, 4) hydrophob und/oder oleophob ausgerüstet sind.

## Claims

1. A self-supporting, airborne sound absorbing engine compartment cladding (1, 1', 1'') for motor vehicles, in particular in the form of an engine hood cladding or of an end wall cladding located on the side of the engine, with at least one open celled expanded material layer (2; 2.1, 2.2) that is lined, at least on one side, with a nonwoven cover (3, 4), an open-pored coating (5; 5.1, 5.2, 5.3) interconnecting the nonwoven cover with the expanded material layer being applied on at least one side of said expanded material layer,
**characterized in that**
said coating (5; 5.1, 5.2, 5.3) is made from a powder mixture which is composed of
15 - 45 wt.-% of thermoplastic material,
8 - 25 wt.-% of thermoset bonding agent and
50 - 70 wt.-% of mineral microbodies,
said mineral microbodies being formed from mineral micro hollow bodies.

2. The engine compartment cladding as set forth in claim 1,
**characterized in that**
there are provided at least two expanded material layers (2.1, 2.2), the coating (5.3) being also applied between at least two of said expanded material layers (2.1, 2.2).

3. The engine compartment cladding as set forth in claim 1 or 2,
**characterized in that**
the expanded material layer (2) or the expanded material layers (2.1, 2.2) are made from thermoset expanded material.

4. The engine compartment cladding as set forth in any one of the claims 1 through 3,
**characterized in that**
it is lined with a nonwoven cover (3, 4) on either side.

5. The engine compartment cladding as set forth in any one of the claims 1 through 4,
**characterized in that**
the coating (5.1, 5.2) is applied on either side of the expanded material layer (2).

6. The engine compartment cladding as set forth in any one of the claims 1 through 5,
**characterized in that**
the nonwoven cover (3) or the nonwoven covers (3, 4) are made from or from polyester fibers mixtures containing polyester fibers polyester fibers

7. The engine compartment cladding as set forth in any one of the claims 1 through 6,
**characterized in that**
the coating (5; 5.1, 5.2, 5.3) is composed of
20 - 30 wt.-% of thermoplastic material,
10 - 20 wt.-% of thermoset bonding agent and
55 - 65 wt.-% of mineral micro hollow bodies.

8. The engine compartment cladding as set forth in any one of the claims 1 through 7,
**characterized in that**
the thermoplastic component of the coating (5; 5.1, 5.2, 5.3) is a plastic material from the group of polyolefins, co-polyesters or co-polyamides.

9. The engine compartment cladding as set forth in any one of the claims 1 through 8,
**characterized in that**
the cross-linking component of the coating (5; 5.1, 5.2, 5.3) is made from phenolic resin, melamine resin, melamine phenolic resin and/or epoxy resin.

10. The engine compartment cladding as set forth in any one of the claims 1 through 9,
**characterized in that**
the coating (5) contains
2 - 6 wt.-% of phenolic resin bonding agent and
8 - 15 wt.-% of melamine resin bonding agent.

11. The engine compartment cladding as set forth in any one of the claims 1 through 10,
**characterized in that**
the coating (5; 5.1, 5.2, 5.3) is applied onto the expanded material layer (2) or onto the nonwoven cover (3, 4) with a weight per unit area ranging between 50 and 200 g/m².

12. The engine compartment cladding as set forth in any one of the claims 1 through 11,
**characterized in that**
the microbodies have a grain size smaller or equal to 400 µm, preferably smaller or equal to 300 µm.

13. The engine compartment cladding as set forth in any one of the claims 1 through 12,
**characterized in that**
they are free from mineral fibers, in particular from glass fibers.

14. The engine compartment cladding as set forth in any one of the claims 1 through 13,
**characterized in that**
the expanded material layer (2; 2.1, 2.2) and/or the nonwoven cover (3) / the nonwoven covers (3, 4) are equipped so as to be hydrophobic and/or oleophobic.

## Revendications

1. Habillage de compartiment moteur (1, 1', 1") auto-porteur et absorbant les bruits aériens, pour véhicules automobiles, en particulier sous forme d'un habillage de capot moteur ou d'un habillage de tablier côté moteur, comprenant au moins une couche en mousse plastique à cellules ouvertes (2 ; 2.1, 2.2) qui, au moins sur une face, est doublée d'un non-tissé de recouvrement (3, 4), au moins sur une face de ladite couche en mousse plastique étant appliqué un revêtement à pores ouverts (5 ; 5.1, 5.2, 5.3) reliant ledit non-tissé de recouvrement à ladite couche en mousse plastique, **caractérisé par le fait que** le revêtement (5 ; 5.1, 5.2, 5.3) est formé d'un mélange de poudre qui est composé de 15 à 45 % en poids de matière plastique thermoplastique, de 8 à 25 % en poids de liant thermodurcissable et de 50 à 70 % en poids de micro-corps minéraux, lesdits micro-corps minéraux étant formés de micro-corps creux minéraux.

2. Habillage de compartiment moteur selon la revendication 1, **caractérisé par le fait qu'**il existe au moins deux couches en mousse plastique (2.1, 2.2), ledit revêtement (5.3) étant appliqué également entre au moins deux desdites couches en mousse plastique (2.1, 2.2).

3. Habillage de compartiment moteur selon la revendication 1 ou 2, **caractérisé par le fait que** la couche en mousse plastique (2) ou les couches en mousse plastique (2.1, 2.2) est ou bien sont formée(s) d'une mousse plastique thermodurcissable.

4. Habillage de compartiment moteur selon l'une quelconque des revendications 1 à 3, **caractérisé par le fait qu'**il est doublé, sur les deux faces, d'un non-tissé de recouvrement (3, 4).

5. Habillage de compartiment moteur selon l'une quelconque des revendications 1 à 4, **caractérisé par le fait que** ledit revêtement (5.1, 5.2) est appliqué sur les deux faces de ladite couche en mousse plastique (2).

6. Habillage de compartiment moteur selon l'une quelconque des revendications 1 à 5, **caractérisé par le fait que** le non-tissé de recouvrement (3) ou les non-tissés de recouvrement (3, 4) est ou bien sont formé(s) de fibres de polyester ou de mélanges contenant des fibres de polyester.

7. Habillage de compartiment moteur selon l'une quelconque des revendications 1 à 6, **caractérisé par le fait que** ledit revêtement (5 ; 5.1, 5.2, 5.3) est composé de 20 à 30 % en poids de matière plastique thermoplastique, de 10 à 20 % en poids de liant thermodurcissable et de 55 à 65 % en poids de micro-corps creux minéraux.

8. Habillage de compartiment moteur selon l'une quelconque des revendications 1 à 7, **caractérisé par le fait que** le composant thermoplastique du revêtement (5 ; 5.1, 5.2, 5.3) est une matière plastique du groupe des polyoléfines, copolyesters ou copolyamides.

9. Habillage de compartiment moteur selon l'une quelconque des revendications 1 à 8, **caractérisé par le fait que** le composant réticulant du revêtement (5 ; 5.1, 5.2, 5.3) est formé de résine phénolique, de résine de mélamine, de résine mélamine-phénol et/ou de résine époxy.

10. Habillage de compartiment moteur selon l'une quelconque des revendications 1 à 9, **caractérisé par le fait que** ledit revêtement (5) comprend entre 2 et 6 % en poids de liant de résine phénolique et entre 8 et 15 % en poids de liant de résine de mélamine.

11. Habillage de compartiment moteur selon l'une quelconque des revendications 1 à 10, **caractérisé par le fait que** ledit revêtement (5, 5.1, 5.2, 5.3) est appliqué à un poids surfacique compris entre 50 et 200 g/m² sur ladite couche en mousse plastique (2) ou sur ledit non-tissé de recouvrement (3, 4).

12. Habillage de compartiment moteur selon l'une quelconque des revendications 1 à 11, **caractérisé par le fait que** les micro-corps présentent une granulométrie inférieure/égale à 400 µm, de préférence inférieure/égale à 300 µm.

13. Habillage de compartiment moteur selon l'une quelconque des revendications 1 à 12, **caractérisé par le fait qu'**il est exempt de fibres minérales, en particulier exempt de fibres de verre.

14. Habillage de compartiment moteur selon l'une quelconque des revendications 1 à 13, **caractérisé par le fait que** ladite couche en mousse plastique (2 ; 2.1, 2.2) et/ou le non-tissé de recouvrement (3) / les non-tissés de recouvrement (3, 4) possèdent un apprêt hydrophobe et/ou oléophobe.
